# EUROPÄISCHE PATENTANMELDUNG

(11) **EP 1 816 878 A1**
(43) Veröffentlichungstag der Anmeldung: **08.08.2007**
(21) Anmeldenummer: 06002167.2
(22) Anmeldetag: 02.02.2006
(51) Int. Cl.: H04Q 7/30

(54) **Verfahren zum Betreiben eines Mobilfunkkommunikationssystems und entsprechendes Mobilfunkkommunikationssystem**

(71) Anmelder: SIEMENS AKTIENGESELLSCHAFT, 80333 München (DE)
(72) Erfinder: Dillinger, Markus, 81737 München (DE); Luo, Jijun, 80797 München (DE); Pan, Jianming, Dr., 1220 Wien (AT); Schulz, Egon, Dr., 80993 München (DE); Slanina, Peter, 3441 Judenau (AT)

(57) **Zusammenfassung**

Die Erfindung betrifft ein Verfahren zum Betreiben eines Mobilfunkkommunikationssystems, bei dem eine erste netzseitige Funkstation (BS1) mit einer Teilnehmerstation (MS) unter Verwendung einer ersten Funktechnologie (RAT1) kommuniziert, während gleichzeitig eine zweite netzseitige Funkstation (BS2): unter Verwendung einer zweiten Funktechnologie (RAT2) kommuniziert, Informationen über von der Teilnehmerstation (MS) verwendbare Funktechnologien (RAT1) empfängt, und eine ihr die Verwendung der ersten Funktechnologie (RAT1) ermöglichende Umkonfiguration durchführt. Im Anschluss kommuniziert die zweite netzseitige Funkstation (BS2) mit der Teilnehmerstation (MS) unter Verwendung der ersten Funktechnologie (RAT1). Weiterhin betrifft die Erfindung ein Mobilfunkkommunikationssystem zur Durchführung des Verfahrens.

## Beschreibung

Die Erfindung betrifft ein Verfahren zum Betreiben eines Mobilfunkkommunikationssystems, bei dem eine erste netzseitige Funkstation mit einer Teilnehmerstation unter Verwendung einer ersten Funktechnologie kommuniziert, während gleichzeitig eine zweite netzseitige Funkstation unter Verwendung einer zweiten Funktechnologie kommuniziert.

In Funkkommunikationssystemen werden Nachrichten, beispielsweise mit Sprachinformation, Bildinformation, Videoinformation, SMS (Short Message Service), MMS (Multimedia Messaging Service) oder anderen Daten, mit Hilfe von elektromagnetischen Wellen über eine Funkschnittstelle zwischen sendender und empfangender Station übertragen. Bei den Stationen kann es sich hierbei je nach konkreter Ausgestaltung des Funkkommunikationssystems um verschiedenartige Teilnehmerstationen oder netzseitige Funkstationen wie Repeater, Funkzugangspunkte oder Basisstationen handeln. In einem Mobilfunkkommunikationssystem handelt es sich bei zumindest einem Teil der Teilnehmerstationen um mobile Funkstationen. Das Abstrahlen der elektromagnetischen Wellen erfolgt mit Trägerfrequenzen, die in dem für das jeweilige System vorgesehenen Frequenzband liegen.

Mobilfunkkommunikationssysteme sind oftmals als zellulare Systeme z.B. nach dem Standard GSM (Global System for Mobile Communication) oder UMTS (Universal Mobile Telecommunications System) mit einer Netzinfrastruktur bestehend z.B. aus Basisstationen, Einrichtungen zur Kontrolle und Steuerung der Basisstationen und weiteren netzseitigen Einrichtungen ausgebildet. Außer diesen weiträumig organisierten (supralokalen) zellularen, hierarchischen Funknetzen gibt es auch drahtlose lokale Netze (WLANs, Wireless Local Area Networks) mit einem in der Regel räumlich deutlich stärker begrenzten Funkabdeckungsbereich. Beispiele verschiedener Standards für WLANs sind HiperLAN, DECT, IEEE 802.11, Bluetooth und WATM.

Aufgrund der technologischen Entwicklung existieren gleichzeitig Teilnehmerstationen, welche eine bestimmte Funktechnologie verwenden, und Teilnehmerstationen, welche eine andere Funktechnologie verwenden. Beispielhaft sei der Wechsel von GSM zu UMTS oder derjenige von 3G zu 3G LTE (LTE: Long Term Evolution) Systemen genannt.

Der Erfindung liegt die Aufgabe zugrunde, ein Verfahren zum Betreiben eines Mobilfunkkommunikationssystems und ein Mobilfunkkommunikationssystem vorzustellen, welche berücksichtigen, dass verschiedene Teilnehmerstationen verschiedene Funktechnologien verwenden.

Diese Aufgabe wird durch ein Verfahren mit den Merkmalen des Anspruchs 1 und durch ein Mobilfunkkommunikationssystem mit Merkmalen eines nebengeordneten Anspruchs gelöst. Vorteilhafte Ausgestaltungen und Weiterbildungen sind Gegenstand von Unteransprüchen.

Bei dem erfindungsgemäßen Verfahren zum Betreiben eines Mobilfunkkommunikationssystems kommuniziert eine erste netzseitige Funkstation mit einer Teilnehmerstation unter Verwendung einer ersten Funktechnologie. Gleichzeitig kommuniziert eine zweite netzseitige Funkstation unter Verwendung einer zweiten Funktechnologie, empfängt Informationen über von der Teilnehmerstation verwendbare Funktechnologien und führt eine ihr die Verwendung der ersten Funktechnologie ermöglichende Umkonfiguration durch. Im Anschluss kommuniziert die zweite netzseitige Funkstation mit der Teilnehmerstation unter Verwendung der ersten Funktechnologie.

Zu Beginn des Verfahrens kommuniziert die Teilnehmerstation mit der ersten netzseitigen Funkstation, wobei hierfür die erste Funktechnologie eingesetzt wird. Zu diesem Zeitpunkt verwendet die zweite netzseitige Funkstation für die Kommunikation die zweite Funktechnologie und nicht die erste Funktechnologie. Sie empfängt Informationen über eine oder mehrere Funktechnologien, welche die Teilnehmerstation verwenden kann, insbesondere darüber, dass die Teilnehmerstation die erste Funktechnologie verwenden kann. Diese Informationen können von der ersten netzseitigen Funkstation an die zweite netzseitige Funkstation gesendet werden, oder alternativ von einer anderen Einrichtung.

Als Reaktion auf den Empfang der Informationen erfolgt eine Umkonfiguration der zweiten netzseitigen Funkstation. Dies ermöglicht der zweiten netzseitigen Funkstation, die erste Funktechnologie zu verwenden. Das bedeutet, dass die zweite netzseitige Funkstation die erste Funktechnologie vor der Umkonfiguration nicht verwenden kann. Die nach der Umkonfiguration stattfindende Verwendung der ersten Funktechnologie durch die zweite netzseitige Funkstation kann zusätzlich oder anstelle der Verwendung der ersten Funktechnologie erfolgen. Die Kommunikation der zweiten netzseitigen Funkstation mit der Teilnehmerstation erfolgt vorzugsweise im direkten Anschluss an die Kommunikation der ersten netzseitigen Funkstation mit der Teilnehmerstation, also nach einem Handover von der ersten zu der zweiten netzseitigen Funkstation.

In Weiterbildung der Erfindung umfasst die Umkonfiguration einen oder mehrere der folgenden Schritte:
Herunterladen einer für die Verwendung der ersten Funktechnologie benötigten Software. Dies ist insbesondere relevant, wenn die zweite netzseitige Funkstation die erste Funktechnologie zuvor noch nicht benutzt hat, oder wenn sie diese zwar verwendet hat, die hierfür erforderliche Software jedoch gelöscht hat.
Aktivieren einer für die Verwendung der ersten Funktechnologie benötigten Software. Dies ist insbesondere relevant, wenn die zweite netzseitige Funkstation die Software zwar gespeichert hat, diese jedoch nicht im betriebsfertigen Zustand ist.
Beschaffen einer Erlaubnis zur Verwendung der ersten Funktechnologie. Hierbei kann es sich z.B. um eine Lizenz zur Benutzung einer Software handeln. Weiterhin ist eine Abstimmung mit anderen netzseitigen Funkstationen oder einer zentralen Einrichtung möglich, so dass Störungen, welche durch die Verwendung der ersten Funktechnologie durch die zweite netzseitige Funkstation verursacht werden könnten, vermieden werden. Reservierung von für die Verwendung der ersten Funktechnologie einsetzbaren Funkressourcen. Die Reservierung kann gegenüber anderen netzseitigen Funkstationen erfolgen, oder auch innerhalb der Funkzelle der zweiten netzseitigen Funkstation. Letzteres kann realisiert werden, indem eine Neuzuweisung von bereits an Teilnehmerstationen zugewiesene Funkressourcen erfolgt.

Einer bevorzugten Ausgestaltung der Erfindung gemäß entsprechen die erste und die zweite Funktechnologie unterschiedlichen Frequenzbereichen des gleichen Funkstandards, oder unterschiedlichen Funkstandards. In beiden Fällen ist der Unterschied zwischen den Funktechnologien derart, dass eine Umkonfiguration nötig ist, bevor die erste Funktechnologie verwendet werden soll, wenn aktuell die zweite Funktechnologie verwendet wird.

In Weiterbildung der Erfindung wird die zweite netzseitige Funkstation aus einer Mehrzahl netzseitiger Funkstationen ausgewählt unter Verwendung von Informationen betreffend eine oder mehrere der folgenden Größen:
Einen Aufenthaltsort der Teilnehmerstation. Die Bestimmung des Aufenthaltsortes kann über an sich bekannte Maßnahmen zur Lokalisierung erfolgen.
Die Bewegung der Teilnehmerstation. Die Bestimmung dieser Größe erfolgt vorzugsweise unter Verwendung mehrerer Aufenthaltsorte. Bewegt sich die Teilnehmerstation auf eine Funkzelle einer netzseitigen Funkstation zu, so wird diese netzseitige Funkstation vorzugsweise als zweite netzseitige Funkstation ausgewählt.
Verkehrswege im Funkabdeckungsbereich der ersten netzseitigen Funkstation. Dies kann ein Indiz dafür sein, auf welche netzseitige Funkstation sich die Teilnehmerstation hinbewegt. Informationen über von der Teilnehmerstation verwendbare Funktechnologien. Auf diese Weise kann z.B. versucht werden, eine netzseitige Funkstation als zweite netzseitige Funkstation auszuwählen, für welche eine Umkonfiguration prinzipiell möglich ist.
Die Verwendbarkeit der ersten Funktechnologie durch die zweite netzseitige Funkstation. Wäre eine Umkonfiguration für eine netzseitige Funkstation nur unter großem Aufwand möglich, so sollte vermieden werden, die betreffende netzseitige Funkstation als zweite netzseitige Funkstation auszuwählen. Die aktuelle Auslastung der zweiten netzseitigen Funkstation. Hierdurch kann ein so genanntes "load balancing", ein Lastenausgleich zwischen verschiedenen netzseitigen Funkstationen, realisiert werden.
Die Auswahl der zweiten netzseitigen Funkstation erfolgt vorzugsweise durch die erste netzseitige Funkstation, wobei dieser hierfür die jeweiligen den oben genannten Kriterien entsprechenden Informationen zur Verfügung stehen. Alternativ kann die Auswahl auch durch eine zentrale Einrichtung, gegebenenfalls unter Mitwirkung der ersten netzseitigen Funkstation, erfolgen.

In Ausgestaltung der Erfindung erfolgt die Umkonfiguration vor Beginn eines Handovers der Teilnehmerstation von der ersten netzseitigen Funkstation zur zweiten netzseitigen Funkstation. Der Beginn eines Handovers zur zweiten netzseitigen Funkstation zeichnet sich dadurch aus, dass die zweite netzseitige Funkstation darüber informiert wird, dass die Teilnehmerstation einen Wechsel in ihre Funkzelle durchführen wird.

Vorzugsweise kommuniziert die zweite netzseitige Funkstation während der Kommunikation mit der Teilnehmerstation unter Verwendung der ersten Funktechnologie mit zumindest einer weiteren Teilnehmerstation unter Verwendung der zweiten Funktechnologie. Dies bedeutet, dass die zweite netzseitige Funkstation die Verwendung der zweiten Funktechnologie nicht beendet, nachdem die Umkonfiguration erfolgt ist, sondern dies fortführt, auch wenn die erste Funktechnologie verwendet wird.

In Ausgestaltung der Erfindung sendet die Teilnehmerstation vor Empfang der Informationen über von der Teilnehmerstation verwendbare Funktechnologien durch die zweite netzseitige Funkstation diese Informationen an die erste netzseitige Funkstation. Hierbei ist es möglich, dass die Informationen, welche die zweite netzseitige Funkstation empfängt, nur eine Teilmenge der Informationen darstellen, welche die Teilnehmerstation der ersten netzseitigen Funkstation betreffend von der Teilnehmerstation verwendbare Funktechnologien sendet.

Einer Weiterbildung der Erfindung gemäß sendet die zweite netzseitige Funkstation Informationen über die Umkonfiguration. Diese Informationen beinhalten vorzugsweise, dass die Umkonfiguration erfolgt ist. Zusätzlich oder alternativ können sie Fortschritte der zweiten netzseitigen Funkstation bei der Durchführung der Umkonfiguration angeben. Die Versendung kann an die erste netzseitige Funkstation erfolgen, direkt oder über eine die Informationen weiterleitende Einrichtung. Alternativ kann die Versendung auch an eine andere Einrichtung erfolgen. Die Informationen sollten zumindest unter anderem an diejenige Einrichtung gesendet werden, welche über einen Handover der Teilnehmerstation entscheidet.

Vorteilhaft ist es, wenn die erste netzseitige Funkstation der Teilnehmerstation eine Nachricht mit einem Verbot des Wechsels der Funktechnologie sendet. Hierdurch kann vermieden werden, dass die Teilnehmerstation von der ersten Funktechnologie zu einer anderen Funktechnologie wechselt, nachdem die zweite netzseitige Funkstation eigens für die Teilnehmerstation die Umkonfiguration durchgeführt hat.

In Ausgestaltung der Erfindung werden Informationen über von der Teilnehmerstation verwendbare Funktechnologien von mehreren netzseitigen Funkstationen empfangen, welche daraufhin eine die Verwendung der ersten Funktechnologie ermöglichende Umkonfiguration durchführen. Somit stehen mehrere netzseitige Funkstationen als Handover-Kandidaten für die Teilnehmerstation zur Verfügung, wobei die Teilnehmerstation bei jedem der Handover-Kandidaten die erste Funktechnologie verwenden könnte.

Das erfindungsgemäße Mobilfunkkommunikationssystem umfasst zumindest eine Teilnehmerstation, sowie eine erste und eine zweite netzseitige Funkstation. Die erste netzseitige Funkstation weist Mittel auf zum Kommunizieren mit der Teilnehmerstation unter Verwendung einer ersten Funktechnologie. Die zweite netzseitige Funkstation weist Mittel auf zum Kommunizieren unter Verwendung einer zweiten Funktechnologie gleichzeitig zur Kommunikation der ersten netzseitigen Funkstation mit der Teilnehmerstation unter Verwendung der ersten Funktechnologie. Das Mobilfunkkommunikationssystem umfasst Mittel zum Senden von Informationen über von der Teilnehmerstation verwendbare Funktechnologien an die zweite netzseitige Funkstation gleichzeitig zur Kommunikation der ersten netzseitigen Funkstation mit der Teilnehmerstation unter Verwendung der ersten Funktechnologie. Die zweite netzseitige Funkstation weist Mittel auf zum Durchführen einer ihr die Verwendung der ersten Funktechnologie ermöglichenden Umkonfiguration gleichzeitig zur Kommunikation der ersten netzseitigen Funkstation mit der Teilnehmerstation unter Verwendung der ersten Funktechnologie. Weiterhin umfasst die zweite netzseitige Funkstation Mittel zum Kommunizieren mit der Teilnehmerstation unter Verwendung der ersten Funktechnologie nach erfolgter Umkonfiguration.

Das erfindungsgemäße Mobilfunkkommunikationssystem eignet sich insbesondere zur Durchführung des erfindungsgemäßen Verfahrens, wobei dies auch auf die Ausgestaltungen und Weiterbildungen zutreffen kann. Hierzu kann es weitere geeignete Mittel umfassen.

Im folgenden wird die Erfindung anhand eines Ausführungsbeispiels näher erläutert. Dabei zeigt:

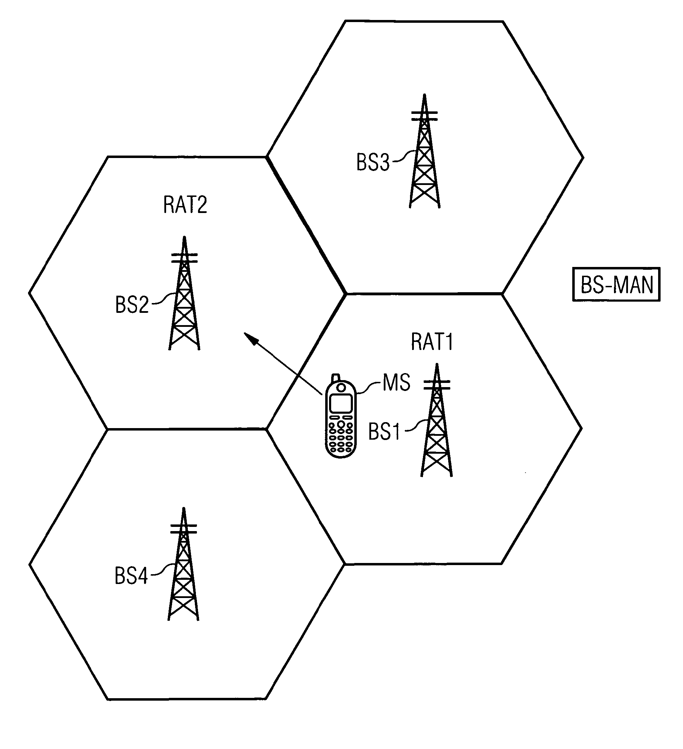

- Figur 1:: einen Ausschnitt aus einem Mobilfunkkommunikationssystem.

Der in Figur 1 dargestellte Ausschnitt aus einem Mobilfunkkommunikationssystem umfasst die Basisstationen BS1, BS2, BS3 und BS4. Bei dem betrachteten System kann es sich z.B. um ein Mobilfunkkommunikationssystem nach dem Standard UMTS handeln. Jede der Basisstationen BS1, BS2, BS3 und BS4 kann in ihrer Funkzelle, vereinfachend jeweils durch ein Sechseck symbolisiert, mit Teilnehmerstationen kommunizieren. Eine solche Teilnehmerstation, die Mobilstation MS, kommuniziert aktuell mit der Basisstation BS1. Weiterhin ist die Einrichtung BS-MAN Teil der Mobilfunkkommunikationssystems, welche - der Übersichtlichkeit halber in Figur 1 nicht dargestellt - mit den Basisstationen BS1, BS2, BS3 und BS4 verbunden ist. Die Einrichtung BS-MAN kann Informationen von den Basisstationen BS1, BS2, BS3 und BS4 empfangen und/oder an diese versenden, sowie von Basisstation zu Basisstation zu übertragende Informationen weiterleiten.

Im Rahmen oder zu Beginn der Kommunikation zwischen der Mobilstation MS und der Basisstation BS1 teilt die Mobilstation MS der Basisstation BS1 ihre Fähigkeiten und/oder Anforderungen in Bezug auf Funktechnologien mit. Hierbei kann die Mobilstation MS z.B. angeben, dass sie lediglich unter Verwendung einer bestimmten Funktechnologie kommunizieren kann, oder dass sie mehrere Funktechnologien beherrscht, gegebenenfalls jedoch eine bestimmte bevorzugt. Die Kommunikation zwischen der Basisstation BS1 und der Mobilstation MS erfolgt dann gemäß diesen Fähigkeiten und/oder Anforderungen, indem wie im folgenden betrachtet eine erste Funktechnologie RAT1 verwendet wird.

Während der Kommunikation zwischen der Mobilstation MS und der Basisstation BS1 werden an eine der Basisstation BS1 benachbarte Basisstation, im folgenden als Kandidaten-Basisstation bezeichnet, Informationen über die Fähigkeiten und/oder Anforderungen der Mobilstation MS in Bezug auf Funktechnologien gesendet. Hierbei kann es sich um die vollständigen Informationen handeln, die der Basisstation BS1 aufgrund der Mitteilung durch die Mobilstation MS zur Verfügung stehen, oder lediglich um einen Teil dieser Informationen. Die Übertragung dieser Informationen kann direkt von der Basisstation BS1 an die Kandidaten-Basisstation erfolgen, wenn die Basisstationen miteinander verbunden sind. Alternativ kann diese Übertragung auch über die Einrichtung BS-MAN erfolgen, an welche die Basisstation BS1 die von der Mobilstation MS empfangenen Informationen sendet, und welche diese an die Kandidaten-Basisstation weiterleitet. Die Kriterien zur Ermittlung der Kandidaten-Basisstation aus allen Nachbarbasisstationen der Basisstation BS1 werden weiter unten erläutert.

Im folgenden wird davon ausgegangen, dass es sich bei der Kandidaten-Basisstation um die Basisstation BS2 handelt. Diese kommuniziert aktuell unter Verwendung der Funktechnologie RAT2, d.h. sie verwendet aktuell nicht die Funktechnologie RAT1. Die Funktechnologien RAT1 und RAT2 können dem gleichen Funkstandard entsprechen, sich jedoch hinsichtlich des Frequenzbereiches, welcher für wie zu verwenden ist, unterscheiden. Beispiele für unterschiedliche Frequenzbereiche sind die Bereiche um 1.25 MHz, 3.5 MHz und 7 MHz. Hierbei können sich auch die Frequenzbreiten, welche bei den unterschiedlichen Frequenzbereichen zur Verfügung stehen, voneinander unterscheiden. Alternativ kann es sich bei den Funktechnologien RAT1 und RAT2 um verschiedene Funkstandards handeln, wie z.B. GSM und UMTS, oder WiMAX und 3G LTE.

Die Kandidaten-Basisstation reagiert auf die empfangenen Informationen über die Mobilstation MS, um in der Lage zu sein, mit der Mobilstation MS zu kommunizieren. Bei der Basisstation BS2 handelt es sich um eine so genannte Multistandard-Basisstation (MSBS: Multistandard Base Station), welche eine Umkonfiguration durchführen kann, so dass sie anstelle oder zusätzlich zur Funktechnologie RAT2 die Funktechnologie RAT1 verwenden kann. Die Art dieser Umkonfiguration hängt einerseits von den empfangenen Informationen betreffend die Mobilstation MS und andererseits von dem aktuellen Zustand der Kandidaten-Basisstation ab.

Beispiele für mögliche Umkonfigurationen sind:
- Beschaffen bzw. Laden von Software, welche die Kandidaten-Basisstation benötigt, um die Funktechnologie RAT1 zu verwenden. Dieses Herunterladen der Software erfolgt vorzugsweise von einem zu diesem Zweck im Mobilfunknetz eingerichteten Server, welcher z.B. Bestandteil des O&M (Operation and Maintenance) Systems sein kann. Es ist auch möglich, dass die Kandidaten-Basisstation die benötigte Software von der Basisstation BS1 erhält, welche diese aktuell zur Kommunikation mit der Mobilstation MS einsetzt.
- Neuaktivieren einer von der Kandidaten-Basisstation gespeicherten, jedoch aktuell nicht benutzten Software, welche die Kandidaten-Basisstation benötigt, um die Funktechnologie RAT1 zu verwenden.
- Beschaffen bzw. Laden einer Lizenz zur Benutzung von Software, welche die Kandidaten-Basisstation benötigt, um die Funktechnologie RAT1 zu verwenden. Dieses Herunterladen der Software erfolgt vorzugsweise von einem zu diesem Zweck im Mobilfunknetz eingerichteten Server, welcher z.B. Bestandteil des O&M (Operation and Maintenance) Systems sein kann.
- Maßnahmen zur Reservierung von Funkressourcen für die Funktechnologie RAT1. Sollen von der Basisstation BS2 für die Funktechnologie RAT1 Funkressourcen verwendet werden, welche die Basisstation BS2 aktuell nicht für die Funktechnologie RAT2 verwendet, kann z.B. eine Abstimmung mit benachbarten Basisstationen über jeweils verwendete Funkressourcen erfolgen, um Interzellinterferenzen zu vermeiden. Sollen von der Basisstation BS2 hingegen für die Funktechnologie RAT1 Funkressourcen verwendet werden, welche die Basisstation BS2 aktuell zumindest teilweise auch für die Funktechnologie RAT2 verwendet, ist es vorteilhaft, Neuzuweisungen von Funkressourcen an Teilnehmerstationen, welche die für die Funktechnologie RAT1 benötigten Funkressourcen aktuell nutzen, vorzunehmen, so dass zumindest ein Teil der Funkressourcen für die Funktechnologie RAT1 unbelegt ist.

Nach der Umkonfiguration können Tests bezüglich Plausibilität und ordnungsgemäßes Funktionieren der Hardware erfolgen, so dass Fehler bei der Verwendung der Funktechnologie RAT1 vermieden werden. Weiterhin ist es vorteilhaft, wenn vor der Verwendung der Funktechnologie RAT1 durch die Kandidaten-Basisstation durch eine Nachfrage bei einer zentralen Einrichtung, wie z.B. der Einrichtung BS-MAN, geprüft wird, ob die Verwendung der Funktechnologie RAT1 Probleme bei anderen Basisstationen hervorrufen könnte.

Wenn der Kandidaten-Basisstation zusammen mit den Informationen über die Funktechnologie zusätzlich Informationen betreffend die von der Mobilstation MS geforderte Übertragungsqualität (englisch: quality of service) zur Verfügung gestellt werden, können diese bei der Umkonfiguration berücksichtigt werden. Dies betrifft insbesondere den Umfang oder die Art der Funkressourcen, welche die Kandidaten-Basisstation für die Funktechnologie RAT1 einplant.

Die Umkonfiguration erfolgt, während die Mobilstation MS mit der Basisstation BS1 kommuniziert, ohne dass bereits ein Handover zu der Basisstation BS2 eingeleitet wurde. Die Kandidaten-Basisstation kann die Basisstation BS1 informieren, dass die Umkonfiguration abgeschlossen ist, und dass somit eine Kommunikation zwischen der Kandidaten-Basisstation und der Mobilstation MS möglich ist. Um zu vermeiden, dass die Mobilstation MS nach erfolgter Umkonfiguration der Kandidaten-Basisstation von der Funktechnologie RAT1 zu einer anderen Funktechnologie wechselt, so dass die Umkonfiguration nicht nötig gewesen wäre, kann der Mobilstation MS eine Signalisierungsnachricht von der Basisstation BS1 gesendet werden, mit welcher ihr ein Wechsel der Funktechnologie untersagt wird. Diese Nachricht kann der Mobilstation MS auch anzeigen, dass Messungen an einem anderen System (englisch: intersystem measurement) nicht durchgeführt werden müssen, da das aktuell verwendete System die Funktechnologie RAT1 zur Verfügung stellt. Hierdurch wird für die Mobilstation MS Aufwand eingespart, welcher für Intersystem-Messungen anfallen würde.

Auch in dem Falle, dass eine Umkonfiguration für die Kandidaten-Basisstation nicht durchführbar war, kann diese die Basisstation BS1 informieren. Dann wird entweder ein Handover von der Basisstation BS1 zur Kandidaten-Basisstation nicht durchgeführt, oder er wird durchgeführt, wenn die Mobilstation MS von der Funktechnologie RAT1 zur Funktechnologie RAT2 wechselt.

Zu einem späteren Zeitpunkt verlässt die Mobilstation MS die Funkzelle der Basisstation BS1 und tritt in die Funkzelle der Basisstation BS2 ein. Es wird ein Handover zwischen den Basisstationen BS1 und BS2 durchgeführt. Da es sich bei der Basisstation BS2 um die Kandidaten-Basisstation handelt, hat diese bereits eine Umkonfiguration durchgeführt, so dass sie ohne Verzögerung beginnen kann, mit der Mobilstation MS unter Verwendung der Funktechnologie RAT1 zu kommunizieren. Dieser Vorteil der ausbleibenden Verzögerung durch die Umkonfiguration lässt sich darauf zurückführen, dass die Umkonfiguration bereits während der Kommunikation der Mobilstation MS mit der Basisstation BS1 erfolgt, und nicht erst zu einem Zeitpunkt, zu welchem bereits der Handover zur Basisstation BS2 begonnen wurde. Würde hingegen die Umkonfiguration erst stattfinden, wenn der Handover zur Basisstation BS2 nötig ist, könnte dies zu einem Gesprächsabbruch oder zumindest zu Qualitätsbeeinträchtigungen führen, denn während der Umkonfiguration kann die Basisstation BS2 die Funktechnologie RAT1 nicht verwenden. Die für die Umkonfiguration der Basisstation BS2 benötigte Zeit hängt davon ab, welche Schritte im Rahmen der Umkonfiguration durchzuführen sind.

Wenn die Mobilstation MS die Funkzelle der Kandidaten-Basisstation wieder verlässt, und keine andere Teilnehmerstation mit der Kandidaten-Basisstation unter Verwendung der Funktechnologie RAT1 kommunizieren möchte, kann die Umkonfiguration wieder rückgängig gemacht werden. Wurde die Software für die Verwendung der Funktechnologie RAT1 von der Kandidaten-Basisstation herunter geladen, so ist es möglich, dass diese nicht wieder gelöscht, sondern zumindest für eine bestimmte Zeitspanne gespeichert wird.

Die Ermittlung der geeigneten Kandidaten-Basisstation aus den Nachbarbasisstationen der Basisstation BS1 kann von der Basisstation BS1 oder von einer anderen Einrichtung, wie der Einrichtung BS-MAN, durchgeführt werden.

Bei der Ermittlung der Kandidaten-Basisstation ist es vorteilhaft, wenn die Bewegungsrichtung der Mobilstation MS, in Figur 1 durch einen Pfeil symbolisiert, bekannt ist und verwendet wird. Diese kann durch mehrere Ortsmessungen festgestellt werden. Wenn weiterhin die Positionen der der Basisstation BS1 benachbarten Basisstationen BS2, BS3 und BS4 bekannt sind, kann entschieden werden, in welche Funkzelle die Mobilstation MS nach Verlassen der Funkzelle der Basisstation BS1 eintritt oder zumindest - ausgehend von einem bestimmten Zeitpunkt und einer bestimmten Bewegungsrichtung der Teilnehmerstation MS - wahrscheinlich eintreten wird.

Zusätzlich oder alternativ zur Bewegungsrichtung der Mobilstation MS können statistische Daten darüber zum Einsatz kommen, mit welcher Wahrscheinlichkeit Teilnehmerstationen nach Verlassen der Funkzelle der Basisstation BS1 in eine bestimmte benachbarte Funkzelle eintreten, gegebenenfalls einen bestimmten Aufenthaltsort der jeweiligen Teilnehmerstation in der Funkzelle der Basisstation BS1 berücksichtigend. Wird z.B. durch Ortsmessungen festgestellt, dass sich eine Teilnehmerstation auf einer Straße in eine bestimmte Richtung bewegt, kann diejenige Funkzelle, in welche sie nach Verlassen der Funkzelle der Basisstation BS1 eintritt, mit großer Wahrscheinlichkeit vorhergesagt werden.

Bei der Auswahl einer geeigneten Kandidaten-Basisstation können die Fähigkeiten und/oder aktuellen Parameter der Basisstationen berücksichtigt werden. Hierfür ist es vorteilhaft, wenn die Basisstationen sie betreffende aktuelle Informationen wie z.B. über ihren aktuellen Auslastungsgrad untereinander austauschen oder an eine zentrale Einrichtung weitergeben. Der Auslastungsgrad wird vorzugsweise daran gemessen, welcher Umfang an Funkressourcen in Bezug zu den der jeweiligen Basisstation insgesamt zur Verfügung stehenden Funkressourcen aktuell belegt sind. Eine Basisstation sollte dann nicht als Kandidaten-Basisstation ausgewählt werden, wenn sie aktuell stark ausgelastet ist, so dass eine Kommunikation mit einer weiteren Teilnehmerstation unvorteilhaft wäre. Weiterhin kann die Eignung einer Basisstation zur Kommunikation unter Verwendung der von der Mobilstation MS gewünschten Funktechnologie RAT1 berücksichtigt werden. Auf diese Weise kann z.B. einer Basisstation der Vorzug gegeben werden, wenn für diese die Umkonfiguration leicht durchführbar ist, so z.B. weil dieser die nötige Software bereits zur Verfügung steht und lediglich aktiviert werden muss, oder weil die betreffende Basisstation eine Funktechnologie aktuell benutzt und lediglich auf einen anderen Frequenzbereich wechseln müsste. Das Einbeziehen von Fähigkeiten und/oder aktuellen Situationen der Basisstationen in die Ermittlung der Kandidaten-Basisstation ist insbesondere dann vorteilhaft, wenn aufgrund des Aufenthaltsorts oder der Bewegungsrichtung der Mobilstation MS mehrere Basisstationen als potentielle Handover-Ziele in Frage kommen.

Auch Parameter der Mobilstation MS unabhängig von der von ihr benötigten Funktechnologie können bei der Ermittlung der Kandidaten-Basisstation berücksichtigt werden. Steht beispielsweise eine Mikrozelle und eine sie beinhaltende Makrozelle zur Verfügung, so ist es vorteilhaft, für langsam bewegte Teilnehmerstationen die Mikrozelle und für schnell bewegte Teilnehmerstationen die Makrozelle als Kandidaten-Basisstation auszuwählen.

Es ist möglich, dass mehrere Kandidaten-Basisstationen bestimmt werden und entsprechend die Informationen betreffend die Mobilstation MS an mehrere Kandidaten-Basisstationen gesendet werden. Dies hat den Vorteil, dass der Mobilität der Mobilstation MS Rechnung getragen wird, denn diese könnte durch einen raschen Richtungswechsel in die Funkzelle einer Basisstation gelangen, welche nicht der wahrscheinlichsten Kandidaten-Basisstation entspricht. Von Nachteil hierbei ist jedoch, dass einerseits mehr Übertragungsressourcen durch die Übertragung der Informationen betreffend die Mobilstation MS aufgebracht werden müssen, und andererseits gegebenenfalls Basisstationen eine aufwendige Umkonfiguration durchführen, ohne im Anschluss die neu eingerichtete Funktechnologie anwenden zu können.

Um zu vermeiden, dass ein Handover zu einer Basisstation durchgeführt wird, welche aktuell nicht unter Verwendung der Funktechnologie RAT1 kommunizieren kann und auch nicht durch eine Umkonfiguration diese Eignung erworben hat, kann die von der Basisstation BS1 ausgestrahlte Nachbarzellliste angepasst werden. Diese Anpassung erfolgt derart, dass die Nachbarzellliste ausschließlich Zellen anzeigt, in welchen aktuell eine Kommunikation unter Verwendung der Funktechnologie RAT1 möglich ist.

Der Zeitpunkt, zu welchem die Informationen, welche die Umkonfiguration auslösen, an die Kandidaten-Basisstation gesendet werden, kann abhängig von verschiedenen Kriterien bestimmt werden. So ist es möglich, die Informationen dann zu versenden, wenn die Basisstation BS1 eine ausreichendes Maß von Informationen betreffend die Mobilstation MS gesammelt hat. Weiterhin können die Informationen dann gesendet werden, wenn die Teilnehmerstation eine bestimmte Nähe zur Kandidaten-Basisstation aufweist, oder wenn eine bestimmte Wahrscheinlichkeit ermittelt wurde, dass die Teilnehmerstation in die Funkzelle der Kandidaten-Basisstation eintreten wird.

Das in Bezug auf die einzelne Mobilstation MS beschriebene Verfahren kann für mehrere oder alle Teilnehmerstationen durchgeführt werden. Besonders vorteilhaft erweist sich dies, wenn eine Gruppe von Teilnehmerstationen etwa gleichzeitig in eine neue Funkzelle gelangt. Denn auf diese Weise kann bei der Umkonfiguration berücksichtigt werden, dass eine Mehrzahl von Teilnehmerstationen die von der jeweiligen Basisstation aktuell nicht verwendete Funktechnologie verwenden möchten, so dass mit einer höheren Wahrscheinlichkeit oder in größerem Umfang eine Umkonfiguration erfolgen sollte.

## Patentansprüche

1. Verfahren zum Betreiben eines Mobilfunkkommunikationssystems, bei dem
• eine erste netzseitige Funkstation (BS1) mit einer Teilnehmerstation (MS) unter Verwendung einer ersten Funktechnologie (RAT1) kommuniziert,
• während gleichzeitig eine zweite netzseitige Funkstation (BS2):
unter Verwendung einer zweiten Funktechnologie (RAT2) kommuniziert,
Informationen über von der Teilnehmerstation (MS) verwendbare Funktechnologien (RAT1) empfängt,
eine ihr die Verwendung der ersten Funktechnologie (RAT1) ermöglichende Umkonfiguration durchführt,
• im Anschluss die zweite netzseitige Funkstation (BS2) mit der Teilnehmerstation (MS) unter Verwendung der ersten Funktechnologie (RAT1) kommuniziert.

2. Verfahren nach Anspruch 1, bei dem die Umkonfiguration umfasst:
• Herunterladen einer für die Verwendung der ersten Funktechnologie (RAT1) benötigten Software, und/oder
• Aktivieren einer für die Verwendung der ersten Funktechnologie (RAT1) benötigten Software, und/oder
• Beschaffen einer Erlaubnis zur Verwendung der ersten Funktechnologie (RAT1), und/oder
• Reservierung von für die Verwendung der ersten Funktechnologie (RAT1) einsetzbaren Funkressourcen.

3. Verfahren nach Anspruch 1 oder 2, bei dem die erste Funktechnologie (RAT1) und die zweite Funktechnologie (RAT2) entsprechen:
• unterschiedlichen Frequenzbereichen des gleichen Funkstandards, oder
• unterschiedlichen Funkstandards.

4. Verfahren nach einem der Ansprüche 1 bis 3, bei dem die zweite netzseitige Funkstation (BS2) aus einer Mehrzahl netzseitiger Funkstationen (BS2, BS3, BS4) ausgewählt wird unter Verwendung von Informationen betreffend:
• einen Aufenthaltsort der Teilnehmerstation (MS), und/oder
• die Bewegung der Teilnehmerstation (MS), und/oder
• Verkehrswege im Funkabdeckungsbereich der ersten netzseitigen Funkstation (BS1), und/oder
• Informationen über von der Teilnehmerstation (MS) verwendbare Funktechnologien (RAT1), und/oder
• die Verwendbarkeit der ersten Funktechnologie (RAT1) durch die zweite netzseitige Funkstation (BS2), und/oder
• die aktuelle Auslastung der zweiten netzseitigen Funkstation (BS2).

5. Verfahren nach einem der Ansprüche 1 bis 4, bei dem die Umkonfiguration vor Beginn eines Handovers der Teilnehmerstation (MS) von der ersten netzseitigen Funkstation (BS1) zu der zweiten netzseitigen Funkstation (BS2) erfolgt.

6. Verfahren nach einem der Ansprüche 1 bis 5, bei dem die zweite netzseitige Funkstation (BS2) während der Kommunikation mit der Teilnehmerstation (MS) unter Verwendung der ersten Funktechnologie (RAT1) mit zumindest einer weiteren Teilnehmerstation (MS) unter Verwendung der zweiten Funktechnologie (RAT2) kommuniziert.

7. Verfahren nach einem der Ansprüche 1 bis 6, bei dem vor dem Empfang der Informationen über von der Teilnehmerstation (MS) verwendbare Funktechnologien (RAT1) durch die zweite netzseitige Funkstation (BS2) die Teilnehmerstation (MS) der ersten netzseitigen Funkstation (BS1) diese Informationen sendet.

8. Verfahren nach einem der Ansprüche 1 bis 7, bei dem die zweite netzseitige Funkstation (BS2) Informationen über die Umkonfiguration versendet.

9. Verfahren nach einem der Ansprüche 1 bis 8, bei dem die erste netzseitige Funkstation (BS1) der Teilnehmerstation (MS) eine Nachricht mit einem Verbot des Wechsels der Funktechnologie (RAT1) sendet.

10. Verfahren nach einem der Ansprüche 1 bis 9, bei dem mehrere netzseitige Funkstationen (BS2, BS3, BS4) Informationen über von der Teilnehmerstation (MS) verwendbare Funktechnologien (RAT1) empfangen, welche daraufhin eine die Verwendung der ersten Funktechnologie (RAT1) ermöglichende Umkonfiguration durchführen.

11. Mobilfunkkommunikationssystem, umfassend zumindest eine Teilnehmerstation (MS), eine erste netzseitige Funkstation (BS1) und eine zweite netzseitige Funkstation (BS2), mit
Mitteln der ersten netzseitigen Funkstation (BS1) zur Kommunikation mit der Teilnehmerstation (MS) unter Verwendung einer ersten Funktechnologie (RAT1),
Mitteln der zweiten netzseitigen Funkstation (BS2) zum Kommunizieren unter Verwendung einer zweiten Funktechnologie (RAT2) gleichzeitig zur Kommunikation der ersten netzseitigen Funkstation (BS1) mit der Teilnehmerstation (MS) unter Verwendung der ersten Funktechnologie (RAT1), Mitteln zum Senden von Informationen über von der Teilnehmerstation (MS) verwendbare Funktechnologien (RAT1) an die zweite netzseitigen Funkstation (BS2) gleichzeitig zur Kommunikation der ersten netzseitigen Funkstation (BS1) mit der Teilnehmerstation (MS) unter Verwendung der ersten Funktechnologie (RAT1),
Mitteln der zweiten netzseitigen Funkstation (BS2) zum Durchführen einer ihr die Verwendung der ersten Funktechnologie (RAT1) ermöglichenden Umkonfiguration gleichzeitig zur Kommunikation der ersten netzseitigen Funkstation (BS1) mit der Teilnehmerstation (MS) unter Verwendung der ersten Funktechnologie (RAT1), und
Mitteln der zweiten netzseitigen Funkstation (BS2) zum Kommunizieren mit der Teilnehmerstation (MS) unter Verwendung der ersten Funktechnologie (RAT1) nach erfolgter Umkonfiguration.
